# EUROPEAN PATENT SPECIFICATION

(11) **EP 4 145 411 B1**
(45) Date of publication and mention of the grant of the patent: **18.03.2026**
(21) Application number: 21194544.9
(22) Date of filing: 02.09.2021
(51) Int. Cl.: G07C 9/00, G07C 9/30, G07C 1/10, G07C 11/00, G07C 9/28, G07C 9/29

(54) **A POWER DISTRIBUTION EQUIPMENT PERSONNEL SAFETY SYSTEM**
PERSONENSICHERHEITSSYSTEM FÜR EINE STROMVERTEILUNGSAUSRÜSTUNG
SYSTÈME DE SÉCURITÉ PERSONNEL D'UN ÉQUIPEMENT DE DISTRIBUTION D'ÉNERGIE

(43) Date of publication of application: 08.03.2023
(60) Divisional application: 25227848.6
(73) Proprietor: ABB SCHWEIZ AG, 5400 Baden (CH)
(72) Inventor: KOZEL, Tomas, 635 00 Brno (CZ); POKORNY, Jiri, 691 85 Dolni Dunajovice (CZ); EGMAN, Marco, 24036 Ponte San Pietro (IT); GATTI, Callisto, 24021 Albino (IT); SARFRAZ, Bilal, 47475 Kamp-Lintfort (DE)
(74) Representative: Maiwald GmbH

(56) References cited:
- EP-A1- 3 359 477
- WO-A1-2019/139874
- CN-A- 112 864 869
- KR-A- 20200 003 439
- US-A1- 2009 015 400
- US-A1- 2017 069 150
- US-A1- 2018 129 276

## Description

### FIELD OF THE INVENTION

The present invention relates to personnel safety systems for power distribution equipment or systems such as low, medium or high voltage switchgear, and to low, medium or high voltage switchgears, transformers, distribution boards, variable speed drives, uninterruptible power supplies, or any other enclosed equipment.

### BACKGROUND OF THE INVENTION

CN112864869A describes a safety type multi-accessory power distribution box based on the Internet of Things, and can relates to a specially-made safety protection system and a door lock control system. It is described that the safety protection system can be in linkage cooperation with the door lock control system and a safety monitoring center through the Internet of Things, so that when an electric leakage phenomenon occurs at a power distribution cabinet body, the safety protection system not only can turn on a warning lamp to give out a warning, but also can cut off a power supply and lead electric leakage to the ground, and can control an intelligent electronic lock to be forcibly locked at the same time, so that the safety performance is greatly improved. It is described that in addition, an infrared monitoring assembly can monitor the periphery of the power distribution cabinet body, and when a person walks in a protective fence, the safety protection system can make a judgment, and when it is judged that the person enters abnormally, the safety protection system can reflect the situation to the safety monitoring center in time, so that the worker can find that the person enters the protective fence abnormally in time.

The safety of personnel in electrical substations containing power distribution equipment such as switchgears, transformers, distribution boards, variable speed drives, UPSs etc. (further Power Distribution Equipment) is ensured by the equipment design and specific safety procedures. The safety procedures are archived in written form and the personnel are trained for the safe operation and maintenance of the power equipment including the safety aspects described in the procedures. The level of adoption of the safety procedures into the daily work routines then depends on many aspects:
- Frequency and intensity of the training
- Level of understanding of the safety procedures
- Compliance of personnel to the procedures
- Level of supervision and reviews by safety officers and superiors

However, different levels of observance and adherence and adoption of the safe working practices and procedures are observed in practical day-to-day situations, resulting in "safety" incidents if the adoption is poor.

There is a need to address this situation.

### SUMMARY OF THE INVENTION

Therefore, it would be advantageous to have improved personnel safety systems for power distribution equipment or systems.

The object of the present invention is solved with the subject matter of the independent claims, wherein further embodiments are incorporated in the dependent claims.

Appended claim 1 defines a power distribution equipment personnel safety system. Appended claim 6 defines a power distribution equipment personnel safety system. The invention and its scope of protection are defined by these claims.

### BRIEF DESCRIPTION OF THE DRAWINGS

Exemplary embodiments will be described in the following with reference to the following drawing:
Fig. 1 shows an example of an overall Personnel Safety System architecture;
Fig. 2 shows an example of a personnel safety system tied to the equipment; and

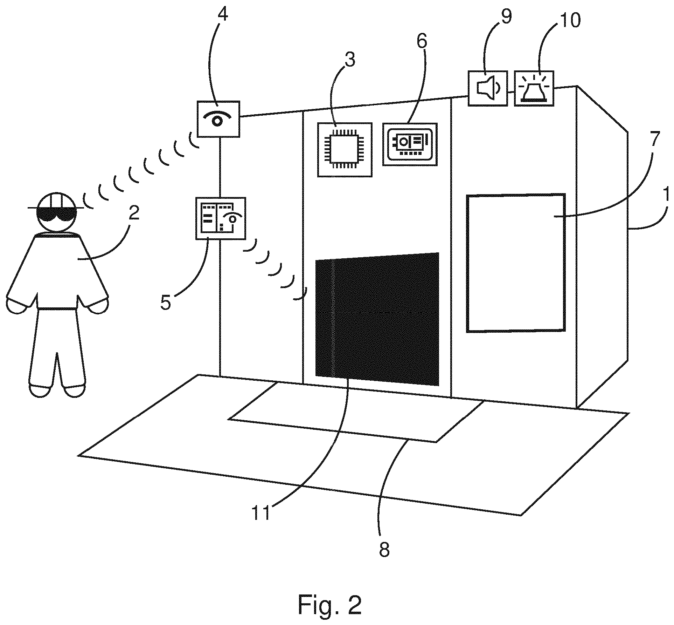

Fig. 2 shows an example of a personnel safety system tied to the person.

### DETAILED DESCRIPTION OF EMBODIMENTS

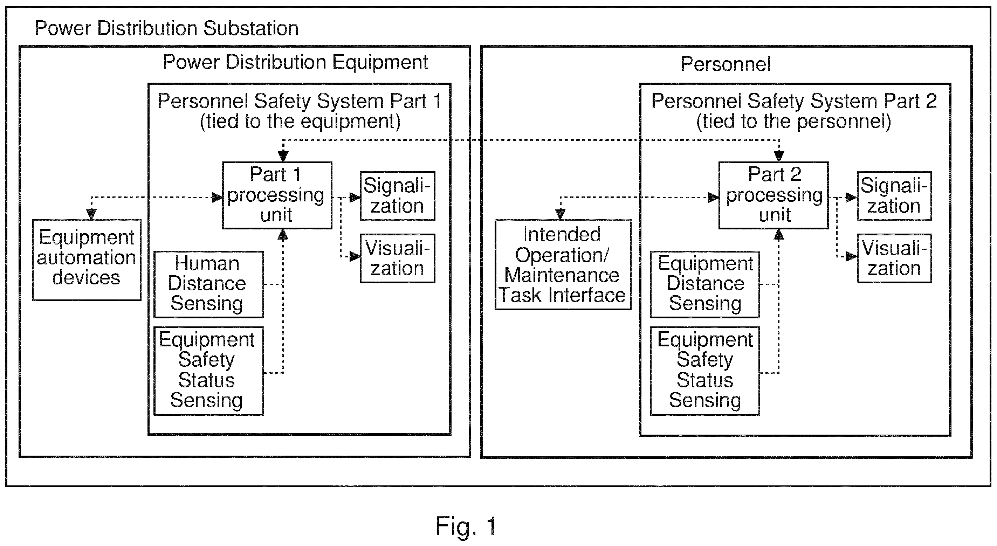

Figs. 1-3 relate to power distribution equipment personnel safety systems and a personal protection equipment system for power distribution equipment.

In an example, a power distribution equipment personnel safety system comprises: a power distribution equipment 1; a processing unit 3; at least one vicinity sensor 4; and at least one power distribution equipment sensor 5. The power distribution equipment comprises an outer envelope. The outer envelope comprises at least one door configured to permit access to an interior of the power distribution equipment and/or wherein the outer envelope comprises at least one cover configured to permit access to the interior of the power distribution equipment. The at least one vicinity sensor is configured to acquire vicinity sensor data in an area outside of the outer envelope of the power distribution equipment, and provide the vicinity sensor data to the processing unit. The processing unit is configured to determine a position of a person in the area outside of the outer envelope of the power distribution equipment, the determination comprising utilization of the vicinity sensor data. The at least one power distribution equipment sensor is configured to acquire status data of the outer envelope of the power distribution equipment and provide the status data to the processing unit. The processing unit is configured to utilize the status data to determine whether the power distribution equipment outer envelope is undisturbed where the at least one door and/or the at least one cover are correctly closed or whether the outer envelope is disturbed where one or more doors or one or more covers are open or not correctly closed or one or more covers are removed. The processing unit is configured to determine a personnel safety state, the determination comprising utilization of the position of the person in the area outside of the outer envelope of the power distribution equipment and whether the power distribution equipment outer envelope is undisturbed or whether the outer envelope is disturbed. The processing unit is configured to determine at least one action comprising utilization of the personnel safety state.

In an example, the power distribution equipment is a switchgear, transformer, distribution board, variable speed drive, uninterruptible power supply, or any other enclosed equipment.

In an example, the processing unit is comprised within the power distribution equipment.

In an example, the processing unit is separate to the power distribution equipment.

In an example, the at least one vicinity sensor is located on the outer envelope.

In an example, the at least one vicinity sensor is separated from the outer envelope.

In an example, the at least one vicinity sensor comprises a camera system and/or a radar system and/or a lidar system.

In an example, the determined position of the person in the area outside of the outer envelope of the power distribution equipment comprises a distance the person is spaced from the outer envelope.

According to an example, the determination of the position of the person in the area outside of the outer envelope of the power distribution equipment comprises utilization by the processing unit of an image processing algorithm to identify a person.

According to an example, the processing unit is configured to implement an image processing algorithm to process the vicinity sensor data to determine whether the person has at least one work item or not, and wherein the determination of the action comprises utilization of whether the person has the work item or not.

According to an example, the at least one power distribution equipment sensor comprises one or more of limit switches, proximity sensors, position sensors, cameras.

According to an example, the personnel safety state comprises one of: a) the equipment outer envelope is undisturbed and no person is detected, b) the equipment outer envelope is undisturbed and a person is detected within a distance X, c) the outer envelope is disturbed and no person is detected within the distance X, d) the outer envelope is disturbed and a person is detected to have just entered a vicinity of the power distribution equipment, e) the outer envelope is disturbed and a person is detected to be within the distance X, f) the outer envelope is disturbed and a person has been detected to have just left the vicinity of the power distribution equipment, g) the outer envelope is disturbed and no person is detected and at least one work item is detected within the distance X that was brought in by a person and the person is not detected for a duration <T.

According to an example, the at least one determined action comprises one or more of: A) engagement of additional power distribution equipment protection in the case where the personnel safety state is d) or e); B) visualization of a safe indication in the case where the personnel safety state is a) or b), visualization of a danger indication in the case where the personnel safety state is c), d), e), or f); C) an indication on the floor of at least one safe zone in the area outside of the envelope in the case where the personnel safety state is c), d), e), or f) and/or an indication of personnel protection equipment to be worn in each zone in the area outside of the envelope in the case where the personnel safety state is c), d), e), or f), and/or an indication of a location of the disturbance in the outer envelope in the case where the personnel safety state is c), d), e), or f); D) signalization to warn of approaching or leaving the power distribution equipment that is in an unsafe state in the case where the personnel safety state is d) or f).

In an example a personal protection equipment system for power distribution equipment comprises: personal protection equipment 12; a processing unit 13; at least one vicinity sensor 14 integrated with or attached to the personal protection equipment; at least one power distribution equipment sensor 15 integrated with or attached to the personal protection equipment; and a user interface 16 integrated with or attached to the personal protection equipment. The personal protection equipment is configured to be worn by a person. The at least one vicinity sensor is configured to acquire vicinity sensor data in an area outside of an outer envelope of a power distribution equipment, and provide the vicinity sensor data to the processing unit. The outer envelope comprises at least one door configured to permit access to an interior of the power distribution equipment and/or the outer envelope comprises at least one cover configured to permit access to the interior of the power distribution equipment. The processing unit is configured to determine a position of a person wearing the personal protection equipment in the area outside of the outer envelope of the power distribution equipment, the determination comprising utilization of the vicinity sensor data. The at least one power distribution equipment sensor is configured to acquire status data of the outer envelope of the power distribution equipment and provide the status data to the processing unit. The processing unit is configured to utilize the status data to determine whether the power distribution equipment outer envelope is undisturbed where the at least one door and/or the at least one cover are correctly closed or whether the outer envelope is disturbed where one or more doors or one or more covers are open or not correctly closed or one or more covers are removed. The user interface is configured to enable the person to enter intended task information relating to the power distribution equipment and provide the task information to the processing unit. The processing unit is configured to determine on the basis of the intended task information whether the power distribution equipment outer envelope is expected to be undisturbed where the at least one door and/or the at least one cover are correctly closed or whether the outer envelope is expected to be disturbed where one or more doors and/or one or more covers are open or one or more covers are removed. The processing unit is configured to determine a personnel safety state, the determination comprising utilization of the position of the person in the area outside of the outer envelope of the power distribution equipment and whether the power distribution equipment outer envelope is undisturbed or whether the outer envelope is disturbed and whether the power distribution equipment outer envelope is expected to be undisturbed or whether the outer envelope is expected to be disturbed. The processing unit is configured to determine at least one action comprising utilization of the personnel safety state.

In an example, the personal protection equipment comprises a head-up display 17 and/or an extended reality display system 18.

In an example, the personal protection equipment comprises a siren 19.

In an example, a siren 19 is separate to the personal protection equipment.

In an example, the system comprises a visual indication system 20.

In an example, the power distribution equipment is a switchgear, transformer, distribution board, variable speed drive, uninterruptible power supply, or any other enclosed equipment.

In an example, the processing unit is integrated with or attached to the personal protection equipment.

In an example, the processing unit is separate to the personal protection equipment.

In an example, the at least one vicinity sensor comprises a camera system and/or a radar system and/or a lidar system.

In an example, the at least one power distribution equipment sensor comprises a camera system and/or a radar system and/or a lidar system.

In an example, the at least one power distribution equipment sensor is the at least one vicinity sensor.

According to an example, the personal protection equipment comprises a head-up display 17 and/or extended reality display system 18, and wherein the processing unit is configured display a representation of the power distribution equipment on the head-up display and/or the extended reality display comprising utilization of the vicinity sensor data.

According to an example, the personal protection equipment comprises a head-up display 17 and/or extended reality display system 18 and wherein the processing unit is configured to display information about the power distribution equipment on the head-up display and/or the extended reality display comprising utilization of the vicinity sensor data.

According to an example, the information about the power distribution equipment comprises one or more of equipment type, equipment designation, short circuit current levels of the equipment, safe operating and troubleshooting instructions.

According to an example, the processing unit is configure to implement an image processing algorithm to process the status data of the outer envelope of the power distribution equipment to determine one or more of: the at least one door is closed, the at least one door is correctly closed, the at least one cover is closed, the at least one cover is correctly closed, one or more doors are open, one or more covers are open, one or more doors are not correctly closed, one or more covers are not correctly closed, and one or more covers are removed.

According to an example, the personnel safety state comprises one of: m) the equipment outer envelope is undisturbed and a person is not intending to operate or maintain the power distribution equipment, n) the equipment outer envelope is undisturbed and a person is detected within a distance Y and the intended operation is not intended to disturb the outer envelope, o) the equipment outer envelope is undisturbed and a person is detected within a distance Y and the intended operation is intended to disturb the outer envelope, p) the outer envelope is disturbed and a person is not intending to operate or maintain the power distribution equipment, q) the outer envelope is disturbed and a person is detected within a distance Y and the intended operation is not intended to disturb the outer envelope, r) the outer envelope is disturbed and a person is detected within a distance Y and the intended operation is intended to disturb the outer envelope.

According to an example, the at least one determined action comprises one or more of: M) Visualization via the head-up display and/or the extended reality display system of a safe indication in the case where the personnel safety state is m) or n), visualization via the head-up display and/or the extended reality display system of a danger indication in the case where the personnel safety state is o), p), q) or r); N) Visualization via the head-up display and/or the extended reality display system an indication on the floor of at least one safe zone in the area outside of the envelope in the case where the personnel safety state is o), p), q), or r) and/or an indication of personnel protection equipment to be worn in each zone in the area outside of the envelope in the case where the personnel safety state is o), p), q), or r), and/or an indication of a location of the disturbance in the outer envelope in the case where the personnel safety state is o), p), q), or r); O) signalization to warn of approaching or leaving the power distribution equipment that is in an unsafe state in the case where the personnel safety state is p) or q); P) Visualization via the head-up display and/or the extended reality display system of instructions for performing an intended operation or maintenance task and/or instructions for troubleshooting an envelope disturbance in the case where the personnel safety state is o), p), q) or r); Q) recording of the vicinity sensor data and/or status data in the case where the personnel safety state is o), p), q) or r).

In an example, a power distribution equipment personnel safety system comprises: a power distribution equipment 1; personal protection equipment 12; a processing unit 3, 13; at least one first vicinity sensor 4 located on the power distribution equipment and/or at a fixed location separate from the power distribution equipment; at least one second vicinity sensor 14 integrated with or attached to the personal protection equipment; at least one first power distribution equipment sensor 5 located in the power distribution equipment and/or at a fixed location separate from the power distribution equipment, and wherein the at least one first power distribution equipment sensor comprises one or more of limit switches, proximity sensors, position sensors, cameras; at least one second power distribution equipment sensor 15 integrated with or attached to the personal protection equipment; and a user interface 16 integrated with or attached to the personal protection equipment. The power distribution equipment comprises an outer envelope. The outer envelope comprises at least one door configured to permit access to an interior of the power distribution equipment and/or wherein the outer envelope comprises at least one cover configured to permit access to the interior of the power distribution equipment. The personal protection equipment is configured to be worn by a person. The at least one first vicinity sensor is configured to acquire first vicinity sensor data in an area outside of the outer envelope of the power distribution equipment, and provide the first vicinity sensor data to the processing unit. The at least one second vicinity sensor is configured to acquire second vicinity sensor data in the area outside of the outer envelope of the power distribution equipment, and provide the first vicinity sensor data to the processing unit. The processing unit is configured to determine a position of the person in the area outside of the outer envelope of the power distribution equipment, the determination comprising utilization of the first vicinity sensor data and the second vicinity data. The at least one first power distribution equipment sensor is configured to acquire status data of the outer envelope of the power distribution equipment and provide the status data to the processing unit. The at least one second power distribution equipment sensor is configured to acquire status data of the outer envelope of the power distribution equipment and provide the status data to the processing unit. The processing unit is configured to utilize the first status data and the second status data to determine whether the power distribution equipment outer envelope is undisturbed where the at least one door and/or the at least one cover are correctly closed or whether the outer envelope is disturbed where one or more doors or one or more covers are open or not correctly closed or one or more covers are removed. The user interface is configured to enable the person to enter intended task information relating to the power distribution equipment and provide the task information to the processing unit. The processing unit is configured to determine on the basis of the intended task information whether the power distribution equipment outer envelope is expected to be undisturbed where the at least one door and/or the at least one cover are correctly closed or whether the outer envelope is expected to be disturbed where one or more doors and/or one or more covers are open or one or more covers are removed. The processing unit is configured to determine a personnel safety state, the determination comprising utilization of the position of the person in the area outside of the outer envelope of the power distribution equipment and whether the power distribution equipment outer envelope is undisturbed or whether the outer envelope is disturbed and whether the power distribution equipment outer envelope is expected to be undisturbed or whether the outer envelope is expected to be disturbed. The processing unit is configured to determine at least one action comprising utilization of the personnel safety state.

According to an example, the personal protection equipment comprises a head-up display 17 and/or extended reality display system 18. The processing unit is configured to display a representation of the power distribution equipment on the head-up display and/or the extended reality display comprising utilization of the vicinity sensor data.

In an example, the processing unit is configured to display information about the power distribution equipment on the head-up display and/or the extended reality display comprising utilization of the vicinity sensor data.

In an example, the information about the power distribution equipment comprises one or more of equipment type, equipment designation, short circuit current levels of the equipment, safe operating and troubleshooting instructions.

In an example, the determination of the position of the person in the area outside of the outer envelope of the power distribution equipment comprises utilization by the processing unit of an image processing algorithm to identify a person.

In an example, the processing unit is configured to implement an image processing algorithm to process the first vicinity sensor data to determine whether the person has at least one work item or not. The determination of the action then comprises utilization of whether the person has the work item or not.

In an example, the processing unit is configure to implement an image processing algorithm to process the second status data of the outer envelope of the power distribution equipment and utilize the first status data and the processed second status data to determine one or more of: the at least one door is closed, the at least one door is correctly closed, the at least one cover is closed, the at least one cover is correctly closed, one or more doors are open, one or more covers are open, one or more doors are not correctly closed, one or more covers are not correctly closed, and one or more covers are removed.

In an example, the personnel safety state comprises one of: a) the equipment outer envelope is undisturbed and no person is detected, b) the equipment outer envelope is undisturbed and a person is detected within a distance X, c) the outer envelope is disturbed and no person is detected within the distance X, d) the outer envelope is disturbed and a person is detected to have just entered a vicinity of the power distribution equipment, e) the outer envelope is disturbed and a person is detected to be within the distance X, f) the outer envelope is disturbed and a person has been detected to have just left the vicinity of the power distribution equipment, g) the outer envelope is disturbed and no person is detected and at least one work item is detected within the distance X that was brought in by a person and the person is not detected for a duration <T.

In an example, the at least one determined action comprises one or more of: A) engagement of additional power distribution equipment protection in the case where the personnel safety state is d) or e); B) visualization of a safe indication in the case where the personnel safety state is a) or b), visualization of a danger indication in the case where the personnel safety state is c), d), e), or f); C) an indication on the floor of at least one safe zone in the area outside of the envelope in the case where the personnel safety state is c), d), e), or f) and/or an indication of personnel protection equipment to be worn in each zone in the area outside of the envelope in the case where the personnel safety state is c), d), e), or f), and/or an indication of a location of the disturbance in the outer envelope in the case where the personnel safety state is c), d), e), or f); D) signalization to warn of approaching or leaving the power distribution equipment that is in an unsafe state in the case where the personnel safety state is d) or f).

In an example, the personnel safety state comprises one of: m) the equipment outer envelope is undisturbed and a person is not intending to operate or maintain the power distribution equipment, n) the equipment outer envelope is undisturbed and a person is detected within a distance Y and the intended operation is not intended to disturb the outer envelope, o) the equipment outer envelope is undisturbed and a person is detected within a distance Y and the intended operation is intended to disturb the outer envelope, p) the outer envelope is disturbed and a person is not intending to operate or maintain the power distribution equipment, q) the outer envelope is disturbed and a person is detected within a distance Y and the intended operation is not intended to disturb the outer envelope, r) the outer envelope is disturbed and a person is detected within a distance Y and the intended operation is intended to disturb the outer envelope.

In an example, the at least one determined action comprises one or more of: M) Visualization via the head-up display and/or the extended reality display system of a safe indication in the case where the personnel safety state is m) or n), visualization via the head-up display and/or the extended reality display system of a danger indication in the case where the personnel safety state is o), p), q) or r); N) Visualization via the head-up display and/or the extended reality display system an indication on the floor of at least one safe zone in the area outside of the envelope in the case where the personnel safety state is o), p), q), or r) and/or an indication of personnel protection equipment to be worn in each zone in the area outside of the envelope in the case where the personnel safety state is o), p), q), or r), and/or an indication of a location of the disturbance in the outer envelope in the case where the personnel safety state is o), p), q), or r); O) signalization to warn of approaching or leaving the power distribution equipment that is in an unsafe state in the case where the personnel safety state is p) or q); P) Visualization via the head-up display and/or the extended reality display system of instructions for performing an intended operation or maintenance task and/or instructions for troubleshooting an envelope disturbance in the case where the personnel safety state is o), p), q) or r); Q) recording of the vicinity sensor data and/or status data in the case where the personnel safety state is o), p), q) or r).

The personnel safety in the electrical substations containing power distribution equipment is influenced by many aspects - level of understanding and compliance to the safety procedures being one of the most important ones.

The power distribution equipment personnel safety systems and personal protection equipment system for power distribution equipment as described above have redundancy that ensures the visualization of safety related aspects for the personnel in an understandable and easy to follow form. This results in increasing the level of understanding of the safety procedures and leads to decreasing the safety incident numbers and severity.

The power distribution equipment personnel safety systems and a personal protection equipment system for power distribution equipment are now described in specific detail in relation to specific embodiments, where reference is again made to Figs. 1-3.

The Personnel Safety System supports the adoption of safety procedures in the operation and maintenance of Power Distribution Equipment. By deploying such a system, the influence of problems as described above are minimized and all personnel are enabled to have the same understanding of the safety procedures and follow the same routines containing the safety best practice.

The Personnel Safety System has two parts, the first part of the system being tied to the Power Distribution Equipment and the second part of the system being tied to the person - also referred here to as personnel. These two parts complement each other and they can work independently, meaning only one part can be implemented at certain cases, or they can be implemented both working independently without any data sharing or they can be implemented both and work in orchestration sharing certain data.

The first part of the Personnel Safety System tied to the equipment consists of sensors, data analysis and a feedback loop in the form of signals routed to the equipment and data visualization for the personnel. The main task of this part is the detection of personnel proximity (distance) to the equipment, detection of personnel safety status of the equipment and taking action based on the collected information. When detecting personnel approaching the equipment or unsafe equipment status, the system can engage or switch on dedicated safety devices or settings, that would improve personnel safety while keeping the power distribution uninterrupted. At the same time it can switch on signalization and/or visualization of the personnel safety status. The visualization can include an explanation of what needs to be done to mitigate the risks - for example what Personal Protective Equipment (PPE) has to be worn or what unsafe condition is detected.

The second part of the Personnel Safety System ties to the personnel. Having a form of smart PPE (for example smart safety glasses) with head up display or extended reality display, it can work with personnel distance to the equipment (measured this time from the personnel towards the equipment) displaying the safety information derived from that distance - for example the proximity of equipment the personnel should be aware of to avoid accidental touching or PPE prescribed for work on certain equipment after opening doors or covers. This part of the system can also provide step by step guidance for performing certain operations or maintenance tasks in a safe manner, guiding the personnel with instructions on the head up display or in extended reality in performing the task safely.

As detailed above, the Personnel Safety System consists of two parts that can operate independently or together. The overall architecture is shown on Fig.1

Part 1 and Part 2 of the system can work in cooperation sharing the data, or they can work independently without the connection depicted in the long dash two dots line shown in Fig. 1. However, each part of the system can work independently of the other one, which creates inherent redundancy. Each part can even be deployed independently (without the other part).

### Personnel Safety System Part 1- tied to the equipment

The part of the system tied to the equipment can be located on the equipment itself and consists of following components as shown in Fig. 2.

The box in the center of Fig. 2 represents a power distribution equipment 1 such as switchgear, transformer, distribution board, variable speed drive, UPS or any other enclosed equipment. The Part 1 Processing Unit 3 is preferably a compact industrial computer with computing power sufficient for handling the inputs from sensors and the associated monitoring tasks. Using an industrial computer with Image recognition (in more general machine learning or artificial intelligence) capabilities can be advantageous here. The Part 1 Processing Unit 3 is located inside the equipment 1 in the auxiliary compartment or box that is typically part of such equipment.

### However, different options exist:

Different option: The Part 1 Processing Unit (3) might be also part of a bigger equipment centralized computer, that has other tasks than the Personnel Safety tasks - for example centralized control and protection.

Different option: The Part 1 Processing Unit (3) might be computation system consisting of an edge and cloud parts. The edge part would be responsible for data collection, pre-processing and computationally non-heavy tasks, while the cloud part would be responsible for the heavy computational tasks.

The Human Distance Sensing 4 is located on the outer surface or holders attached to the power distribution equipment 1. The sensing is preferably in form of visual cameras directed to monitor the vicinity of the power distribution equipment. The cameras field of view is such, that the human personnel 2 presence in an area near the equipment is detected and the personnel position with respect to the equipment can be retrieved with an accuracy that can for example be - minimum in tens of centimeters. The camera streams are transferred to the Part 1 Processing Unit 3, where the image recognition models recognize the human presence and the distance to the equipment. The presence and distance of the human personnel from the equipment can then be further considered in the Personnel Safety System calculations.

### However, additional options exist:

Additional option: Human Distance Sensing 4 can include image recognition of certain items brought in by the personnel. A toolbox for example means a maintenance work is going to be performed, insulation resistance tester means a testing work is going to be performed.

The Equipment Safety Status Sensing 5 can be realized as one device or combination of several devices from the list below:
- end position detection (limit switches, proximity sensors, position sensors) located inside the equipment 1.
- visual cameras (these can be the same cameras as 4) on the outer surface or holders attached to the power distribution equipment 1.

The Equipment Safety Status Sensing 5 main task is the detection of the status of the equipment 1 outer envelope, that is providing arc proof containment of the equipment and/or a barrier to live parts of the equipment. Any disturbance 11 to the integrity of the outer envelope (both intentional as well as unintentional) can be detected and considered in further Personnel Safety System calculations. The intentional disturbance of the envelop is for example that relating to a cover, that was removed for performing a maintenance job leaving an opening in the envelope 11. An unintentional disturbance is for example that relating to an equipment door, that seems to be closed in its final position but the door closing was not finished properly leaving a weak spot in the envelope.

### Additional options exist:

Additional option: Equipment Safety Status Sensing 5 can use the inputs from monitoring and diagnostic system, if that includes the envelope status sensing (for example doors are properly closed confirmation). The information from the monitoring and diagnostic system can be complemented with other information, that the monitoring and diagnostic system doesn't monitor (for example rear cover properly closed confirmation).

The Part 1 Processing Unit (3) then decides based on the analysis of inputs from Human Distance sensing (4) and Equipment Safety Status Sensing (5) on following personnel safety states:
a.) the equipment outer envelope is undisturbed and no personnel is around
b.) the equipment outer envelope is undisturbed and the personnel is in distance X
c.) the equipment envelope is disturbed and there is no personnel around
d.) the equipment envelope is disturbed and the personnel just entered the equipment vicinity
e.) the equipment envelope is disturbed and the personnel is in distance X
f.) the equipment envelope is disturbed and the personnel just left the equipment vicinity

### Additional options exist:

### Additional option:

g.) the equipment envelop is disturbed, some items brought in by the personnel are still detected but presence of personnel is not detected for duration <T

The outputs of the Part 1 Processing Unit 3 are then depending on the calculated state. The outputs of the Part 1 Processing Unit 3 comprises one or any combination of following actions:
A.) Signalization of the personnel safety state to Equipment Automation Devices 6 such as protection relays, control relays, remote IOs or remote terminal units of the distributed control system or electrical network monitoring system etc. The system would be set to increase the personnel safety by engaging additional protection in case the state is d) or e). The additional protection might be a dedicated personnel safety device (for example Ultra Fast Earthing Switch) or a dedicated setting (for example sensitive setting of overcurrent protection). The engagement of the additional protection shall be signaled back to Part 1 Processing Unit 3, that shall consider the additional protection in the calculation of the Personnel Safety status and in visualization and signalization. The additional protection would be engaged in the situations d) and e) and would be disengaged in all other situations.
B.) Visualization of the personnel safety state on the equipment faceplate 7, where information of the status can be accompanied with information about risk mitigation. The status a) and b) would be visualized as "safe", while statuses c), d), e) and f) would be visualized as "danger" with the indication of area, where the outer envelope of the equipment is disturbed and indication of arc flash PPE that should be worn by the personnel in the detected distance X. The technology used for visualization can take form of a display or the information can be projected on suitable part of equipment faceplate.
C.) Visualization of the personnel safety state on the floor 8, where information of the status can be visualized in form of safety zones and accompanied with information about risk mitigation. The status a) and b) would be visualized as "safe" with no safety zones depicted, while statuses c), d), e) and f) would be visualized as "danger" with the indication of arc flash zones around the disturbance on the equipment envelope, indication of location of the outer envelope disturbance and PPE that should be worn by the personnel in each zone. The visualization would be preferably using on-floor projection technology. The visualization of state d) and f) might include a visual siren (in form of pulsating "warning" visuals) to stress to the personnel, that the equipment is in unsafe state.
D.) Signalization of the safety status can be either given in the form of sound 9 signalization (for example a sound siren) or in form of visual signalization 10 for example an optical siren. The signalization would be triggered in states d) or f) to warn the personnel about approaching or leaving the equipment in unsafe state. The signalization is integrated in the equipment 1 or located on the outer surface or holders attached to the power distribution equipment.

### Additional options exist:

Additional option: If state g) is recognized, the signalization can be suppressed as the expectation is the personnel left the vicinity of the equipment but will return soon to continue the job. If the personnel doesn't return before the preset time T expires, the signalization is reactivated.

### Personnel Safety System Part 2 - tied to the personnel

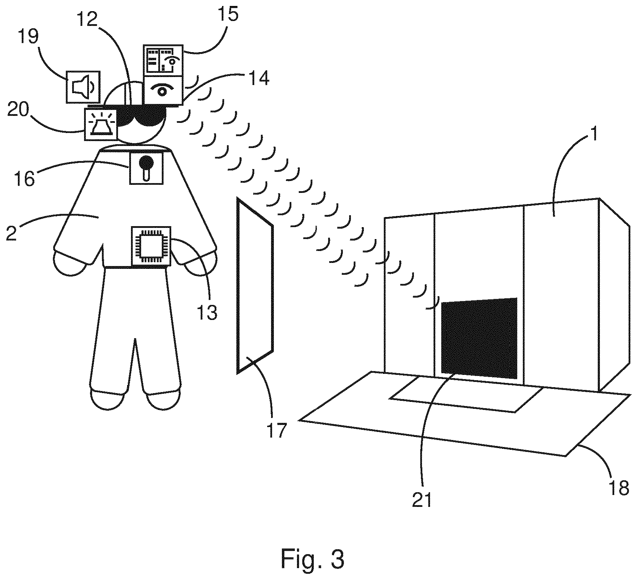

The part of the system tied to the personnel would be located on the smart PPE and consist of following components as shown in Fig. 3.

The human shaped figure on the left-hand side of Fig. 3 represents the human personnel 2 wearing smart Personal Protective Equipment (PPE) 12. The Part 2 Processing Unit 13 is preferably a wearable electronic with computing power sufficient for handling the inputs from sensors and the associated monitoring and visualization tasks. The Part 2 Processing Unit 13 is preferably indivisible and embedded part of the smart PPE 12 or alternatively it might be a separate pocketsize electronic device connected with the smart PPE with wired or wireless connection line. The eyewear headsets available on market with necessary industrial certification such as RealWear HMT-1, Microsoft HoloLens 2 or any other with tailored made software can for example be used for this application as smart PPE 12.

### Different options exists:

Different option: The Part 2 Processing Unit 13 can be a computation system consisting of an edge and cloud parts. The edge part would be embedded in the smart PPE 12 and it would be responsible for data collection, pre-processing and computationally non-heavy tasks, while the cloud part would be responsible for the heavy computational tasks.

The Equipment Distance Sensing 14 is preferably set of sensors embedded in the smart PPE 12 that allows spatial mapping and understanding of the 3D space in the field of view of the personnel. The power distribution equipment 1, that is in the real life bounded by the outer enclosure is in the virtual 3D space map represented by a virtual mass of the same size, that carries additional information such as equipment type, equipment designation, short circuit current levels of the equipment, image recognition models for detection of the Equipment Safety Status (for example models for image recognition of the integrity of the equipment outer envelope) and log of the last Equipment Safety Status as minimum. The safe operating and troubleshooting instructions can be part of the additional information as well. The Equipment Distance Sensing 14 output is distance from the personnel to the equipment with accuracy in tens of centimeters or better, that is then further used in the Personnel Safety System calculations.

The Equipment Safety Status Sensing 15 can be preferably provided by an optical camera or cameras and associated image recognition models. The Equipment Safety Status Sensing 15 can recognize the status of the outer equipment envelope integrity - for example if some covers or door on the equipment are opened leaving opening in the outer enclosure 21, the Equipment Safety Status Sensing can detect it and provide this information to the Part 2 Processing Unit 13. Preferably both intentional and unintentional envelope disturbances should be recognized. Subtle disturbance recognition (for example door closed but the door handle not in final closed position) can be hard to achieve or very much dependent on the location of the personnel with respect to the disturbance, however when Part 1 is also interacting with Part 2, then switches, or relays can be used to detect that a door is not correctly closed.

Any detected disturbance to the integrity of the outer envelope can then be considered in further Personnel Safety System calculations.

The personnel 2 can interact with the Part 2 Processing Unit 13 using the Intended Operation/Maintenance Task Interface 16. The communication can take form of one or any combination of following methods:
- Natural voice input - the Intended Operation/Maintenance Task Interface 16 then consist of microphone and natural language processing
- Pre-programmed voice commands - the Intended Operation/Maintenance Task Interface 16 then consist of microphone, visualization of available tasks and commands recognition.
- Hand and/or head gestures and movement - the Intended Operation/Maintenance Task Interface 16 then consist of gestures and movement recognition and visualization of available tasks

The personnel 2 specifies what task he is going to perform on the equipment using the Intended Operation/Maintenance Task Interface 16. The main information derived from this input would be, whether the task the personnel is going to perform involves any intentional disturbance to the envelope of the equipment.

The Intended Operation/Maintenance Task information about intended disturbance to the envelope is then processed in the Personnel Safety System calculations.

The Part 2 Processing Unit 13 then decides based on the analysis of inputs from Equipment Distance Sensing 14, Equipment Safety Status Sensing 15 and the Intended Operation/Maintenance Task Interface 16 information on following personnel safety states:
m.) the equipment outer envelope is undisturbed and the personnel is walking by not intending to operate or maintain the equipment
n.) the equipment outer envelope is undisturbed, the personnel is in distance Y and the intended operation will not disturb the equipment envelope
o.) the equipment outer envelope is undisturbed, the personnel is in distance Y and the intended operation will disturb the equipment envelope
p.) the equipment envelope is disturbed and the personnel is walking by not intending to operate or maintain the equipment
q.) the equipment envelope is disturbed, the personnel is in distance Y and intends to work on the equipment on the task that doesn't involve intentional envelope disturbance
r.) the equipment envelope is disturbed, the personnel is in distance Y and intends to work on the equipment on the task that involves intentional envelope disturbance

The outputs of the Part 2 Processing Unit 13 are then depending on the calculated state. The outputs of the Part 1 Processing Unit 13 comprises one or any combination of following actions:
M.) Visualization of the personnel safety state on the head up display 17, where information of the status can be accompanied with information about risk mitigation. The status m) and n) would be visualized as "safe", while statuses o), p), q) and r) would be visualized as "danger" with the indication of area, where the outer envelope of the equipment is disturbed and indication of PPE that should be worn by the personnel in the detected distance Y. The technology used for visualization can take form of a head up display or the information can take form of virtual screen in the space in field of view of the personnel 2.
N.) Visualization of the personnel safety state on the floor or in the 3D space 18, where information of the status can be visualized in form of safety zones and accompanied with information about risk mitigation. The status m) and n) would be visualized as "safe" with no safety zones depicted, while statuses o), p), q) and r) would be visualized as "danger" with the indication of arc flash zones around the disturbance on the equipment envelope, indication of location of the outer envelope disturbance and PPE that should be worn by the personnel in each zone. The visualization would be preferably using augmentation displaying in the 3D space directly in the place of use. The visualization of state p) and q) might include a visual siren (in form of pulsating "warning" augmentation) to stress to the personnel, that the equipment is in unsafe state.
O.) Signalization of the safety status can be either given in the form of sound 19 signalization (for example a sound siren) or in form of visual signalization 20 for example an optical siren. The signalization would be triggered in states p) or q) to warn the personnel about approaching or leaving the equipment in unsafe state. The signalization is preferably integrated in the Smart PPE 12.
P.) Visualization of the Safe Procedure Guides can be triggered in states o), p), q) and r). The guides can be displayed on the head up display 17 or as augmentation in the 3D space 18 and it would contain step by step instructions for performing intended operation or maintenance task or step by step instruction for troubleshooting the envelope disturbance. The instruction would lead the personnel 2 and might be built in an interactive manner with the personnel confirming activities of each step are fulfilled.

Additional options exist:
Q.) Additional option: The recording of the personnel actions trough the visual camera used for Equipment Distance Sensing (14) or Equipment Safety Status Sensing (15) can be triggered in states o), p), q) and r) for later use and review.

### Information sharing between Part 1 and Part 2 - optional

A wireless connection and communication can be established between Personnel Safety System Part 1 and Part 2. It is not a mandatory feature of the system, both parts can work stand alone and one part operate without any connection to the other one, but such information sharing might improve the information quality for each part of the system in certain aspects.

As Part 1 of the system is tied to the equipment, it can have better information quality on the Equipment Safety Status and if shared to Part 2 of the System, this information would improve the Part 2 safety status calculations.

The Part 2 of the system can then have better information on the Intended Operation/Maintenance Task and this information if shared to Part 1 of the system can be used to improve the Part 1 status calculations.

While the invention has been illustrated and described in detail in the drawing and foregoing description, such illustration and description are to be considered illustrative or exemplary and not restrictive. The invention is not limited to the disclosed embodiments. Other variations to the disclosed embodiments can be understood and effected by those skilled in the art .

## Claims

1. A power distribution equipment personnel safety system, comprising:
- a power distribution equipment (1);
- a processing unit (3);
- at least one vicinity sensor (4); and
- at least one power distribution equipment sensor (5);
wherein the power distribution equipment comprises an outer envelope, and wherein the outer envelope comprises at least one door configured to permit access to an interior of the power distribution equipment and/or wherein the outer envelope comprises at least one cover configured to permit access to the interior of the power distribution equipment;
wherein the at least one vicinity sensor is configured to acquire vicinity sensor data in an area outside of the outer envelope of the power distribution equipment, and provide the vicinity sensor data to the processing unit;
wherein the processing unit is configured to determine a position of a person in the area outside of the outer envelope of the power distribution equipment, the determination comprising utilization of the vicinity sensor data;
wherein the processing unit is configured to implement an image processing algorithm to process the vicinity sensor data to determine whether the person has at least one work item or not;
wherein the at least one power distribution equipment sensor is configured to acquire status data of the outer envelope of the power distribution equipment and provide the status data to the processing unit;
wherein the processing unit is configured to utilize the status data to determine whether the power distribution equipment outer envelope is undisturbed where the at least one door and/or the at least one cover are correctly closed or whether the outer envelope is disturbed where one or more doors or one or more covers are open or not correctly closed or one or more covers are removed;
wherein the processing unit is configured to determine a personnel safety state, the determination comprising utilization of the position of the person in the area outside of the outer envelope of the power distribution equipment and whether the power distribution equipment outer envelope is undisturbed or whether the outer envelope is disturbed; and
wherein the processing unit is configured to determine and take at least one action based on the personnel safety state and based on whether the person has the work item or not.

2. System according to claim 1, wherein the determination of the position of the person in the area outside of the outer envelope of the power distribution equipment comprises utilization by the processing unit of an image processing algorithm to identify a person.

3. System according to any of claims 1-2, wherein the at least one power distribution equipment sensor comprises one or more of limit switches, proximity sensors, position sensors, cameras.

4. System according to any of claims 1-3, wherein the personnel safety state comprises one of: a) the equipment outer envelope is undisturbed and no person is detected, b) the equipment outer envelope is undisturbed and a person is detected within a distance X, c) the outer envelope is disturbed and no person is detected within the distance X, d) the outer envelope is disturbed and a person is detected to have just entered a vicinity of the power distribution equipment, e) the outer envelope is disturbed and a person is detected to be within the distance X, f) the outer envelope is disturbed and a person has been detected to have just left the vicinity of the power distribution equipment, g) the outer envelope is disturbed and no person is detected and at least one work item is detected within the distance X that was brought in by a person and the person is not detected for a duration <T.

5. System according to claim 4, wherein the at least one determined action comprises one or more of: A) engagement of additional power distribution equipment protection in the case where the personnel safety state is d) or e); B) visualization of a safe indication in the case where the personnel safety state is a) or b), visualization of a danger indication in the case where the personnel safety state is c), d), e), or f); C) an indication on the floor of at least one safe zone in the area outside of the envelope in the case where the personnel safety state is c), d), e), or f) and/or an indication of personnel protection equipment to be worn in each zone in the area outside of the envelope in the case where the personnel safety state is c), d), e), or f), and/or an indication of a location of the disturbance in the outer envelope in the case where the personnel safety state is c), d), e), or f); D) signalization to warn of approaching or leaving the power distribution equipment that is in an unsafe state in the case where the personnel safety state is d) or f).

6. A power distribution equipment personnel safety system, comprising:
- a power distribution equipment (1);
- personal protection equipment (12);
- a processing unit (3, 13);
- at least one first vicinity sensor (4) located on the power distribution equipment and/or at a fixed location separate from the power distribution equipment;
- at least one second vicinity sensor (14) integrated with or attached to the personal protection equipment;
- at least one first power distribution equipment sensor (5) located in the power distribution equipment and/or at a fixed location separate from the power distribution equipment, and wherein the at least one first power distribution equipment sensor comprises one or more of limit switches, proximity sensors, position sensors, cameras;
- at least one second power distribution equipment sensor (15) integrated with or attached to the personal protection equipment; and
- a user interface (16) integrated with or attached to the personal protection equipment;
wherein the power distribution equipment comprises an outer envelope, and wherein the outer envelope comprises at least one door configured to permit access to an interior of the power distribution equipment and/or wherein the outer envelope comprises at least one cover configured to permit access to the interior of the power distribution equipment;
wherein the personal protection equipment is configured to be worn by a person;
wherein the at least one first vicinity sensor is configured to acquire first vicinity sensor data in an area outside of the outer envelope of the power distribution equipment, and provide the first vicinity sensor data to the processing unit;
wherein the at least one second vicinity sensor is configured to acquire second vicinity sensor data in the area outside of the outer envelope of the power distribution equipment, and provide the second vicinity sensor data to the processing unit;
wherein the processing unit is configured to determine a position of the person in the area outside of the outer envelope of the power distribution equipment, the determination comprising utilization of the first vicinity sensor data and the second vicinity sensor data;
wherein the processing unit is configured to implement an image processing algorithm to process the first vicinity sensor data to determine whether the person has at least one work item or not;
wherein the at least one first power distribution equipment sensor is configured to acquire status data of the outer envelope of the power distribution equipment and provide the status data to the processing unit;
wherein the at least one second power distribution equipment sensor is configured to acquire status data of the outer envelope of the power distribution equipment and provide the status data to the processing unit;
wherein the processing unit is configured to utilize the first status data and the second status data to determine whether the power distribution equipment outer envelope is undisturbed where the at least one door and/or the at least one cover are correctly closed or whether the outer envelope is disturbed where one or more doors or one or more covers are open or not correctly closed or one or more covers are removed;
wherein the user interface is configured to enable the person to enter intended task information relating to the power distribution equipment and provide the task information to the processing unit;
wherein the processing unit is configured to determine on the basis of the intended task information whether the power distribution equipment outer envelope is expected to be undisturbed where the at least one door and/or the at least one cover are correctly closed or whether the outer envelope is expected to be disturbed where one or more doors and/or one or more covers are open or one or more covers are removed;
wherein the processing unit is configured to determine a personnel safety state, the determination comprising utilization of the position of the person in the area outside of the outer envelope of the power distribution equipment and whether the power distribution equipment outer envelope is undisturbed or whether the outer envelope is disturbed and whether the power distribution equipment outer envelope is expected to be undisturbed or whether the outer envelope is expected to be disturbed; and
wherein the processing unit is configured to determine and take at least one action based on the personnel safety state and based on whether the person has the work item or not.

7. System according to claim 6, wherein the personal protection equipment comprises a head-up display (17) and/or extended reality display system (18), and wherein the processing unit is configured display a representation of the power distribution equipment on the head-up display and/or the extended reality display comprising utilization of the vicinity sensor data.

## Patentansprüche

1. Personensicherheitssystem für Stromverteilungsanlagen, umfassend:
- einer Stromverteilungsanlage (1);
- eine Verarbeitungseinheit (3);
- mindestens einen Umgebungssensor (4); und
- mindestens einen Stromverteilungsanlagen-Sensor (5);
wobei die Stromverteilungsanlage eine Außenhülle umfasst und wobei die Außenhülle mindestens eine Tür umfasst, die so konfiguriert ist, dass sie den Zugang zum Inneren der Stromverteilungsanlage ermöglicht, und/oder wobei die Außenhülle mindestens eine Abdeckung umfasst, die so konfiguriert ist, dass sie den Zugang zum Inneren der Stromverteilungsanlage ermöglicht;
wobei der mindestens eine Umgebungssensor so konfiguriert ist, dass er Umgebungssensordaten in einem Bereich außerhalb der Außenhülle der Stromverteilungsanlage erfasst und die Umgebungssensordaten an die Verarbeitungseinheit liefert;
wobei die Verarbeitungseinheit so konfiguriert ist, dass sie eine Position einer Person in dem Bereich außerhalb der Außenhülle der Stromverteilungsanlage bestimmt, wobei die Bestimmung die Verwendung der Umgebungssensordaten umfasst;
wobei die Verarbeitungseinheit so konfiguriert ist, dass sie einen Bildverarbeitungsalgorithmus implementiert, um die Umgebungssensordaten zu verarbeiten und zu bestimmen, ob die Person mindestens ein Arbeitselement hat oder nicht;
wobei der mindestens eine
Stromverteilungsgerätesensor so konfiguriert ist, dass er Statusdaten der Außenhülle des Stromverteilungsgeräts erfasst und die Statusdaten an die Verarbeitungseinheit übermittelt;
wobei die Verarbeitungseinheit so konfiguriert ist, dass sie die Statusdaten verwendet, um zu bestimmen, ob die Außenhülle der Stromverteilungsanlage ungestört ist, wenn die mindestens eine Tür und/oder die mindestens eine Abdeckung korrekt geschlossen sind, oder ob die Außenhülle gestört ist, wenn eine oder mehrere Türen oder eine oder mehrere Abdeckungen offen oder nicht korrekt geschlossen sind oder eine oder mehrere Abdeckungen entfernt wurden;
wobei die Verarbeitungseinheit so konfiguriert ist, dass sie einen Personensicherheitszustand bestimmt, wobei die Bestimmung die Verwendung der Position der Person in dem Bereich außerhalb der Außenhülle der Stromverteilungsanlage und die Feststellung umfasst, ob die Außenhülle der Stromverteilungsanlage ungestört ist oder ob die Außenhülle gestört ist; und
wobei die Verarbeitungseinheit so konfiguriert ist, dass sie mindestens eine Maßnahme auf der Grundlage des Personensicherheitszustands und auf der Grundlage, ob die Person das Arbeitselement hat oder nicht, bestimmt und ergreift.

2. System nach Anspruch 1, wobei die Bestimmung der Position der Person in dem Bereich außerhalb der Außenhülle der Stromverteilungsanlage die Verwendung eines Bildverarbeitungsalgorithmus durch die Verarbeitungseinheit umfasst, um eine Person zu identifizieren.

3. System nach einem der Ansprüche 1-2, wobei der mindestens eine Stromverteilungsanlagen-Sensor einen oder mehrere Endschalter, Näherungssensoren, Positionssensoren oder Kameras umfasst.

4. System nach einem der Ansprüche 1-3, wobei der Personensicherheitszustand eines der folgenden umfasst: a) die Außenhülle der Anlage ist ungestört und es wird keine Person erkannt, b) die Außenhülle der Anlage ist ungestört und es wird eine Person innerhalb einer Entfernung X erkannt, c) die Außenhülle ist gestört und es wird keine Person innerhalb der Entfernung X erkannt, d) die Außenhülle ist gestört und es wird erkannt, dass eine Person gerade in die Nähe der Stromverteilungsanlage eingetreten ist, e) die Außenhülle ist gestört und es wird erkannt, dass sich eine Person innerhalb der Entfernung X befindet, f) die Außenhülle ist gestört und es wurde eine Person erkannt, die gerade den Bereich der Stromverteilungsanlage verlassen hat, g) die Außenhülle ist gestört und es wird keine Person erkannt, und innerhalb der Entfernung X wird mindestens ein Arbeitsgegenstand erkannt, der von einer Person mitgebracht wurde, und die Person wird für eine Dauer <T nicht erkannt.

5. System gemäß Anspruch 4, wobei die mindestens eine festgelegte Aktion eine oder mehrere der folgenden umfasst: A) Aktivierung eines zusätzlichen Schutzes für die Stromverteilungsanlage, wenn der Personensicherheitszustand d) oder e) vorliegt; B) Anzeige einer Sicherheitsmeldung, wenn der Personensicherheitszustand a) oder b) vorliegt, Anzeige einer Gefahrenmeldung, wenn der Personensicherheitszustand c), d), e) oder f) vorliegt; C) Anzeige mindestens einer Sicherheitszone auf dem Boden außerhalb des Gehäuses, wenn der Personensicherheitsstatus c), d), e) oder f) ist, und/oder Anzeige der in jeder Zone außerhalb des Gehäuses zu tragenden Personenschutzausrüstung, wenn der Personensicherheitsstatus c), d), e) oder f) und/oder eine Angabe des Ortes der Störung in der Außenhülle, wenn der Personensicherheitszustand c), d), e) oder f) ist; D) Signalisierung, die vor dem Annähern an oder Verlassen von Stromverteilungsanlagen warnt, die sich in einem unsicheren Zustand befinden, wenn der Personensicherheitszustand d) oder f) ist.

6. Ein Personensicherheitssystem für Stromverteilungsanlagen, umfassend:
- eine Stromverteilungsanlage (1);
- eine persönliche Schutzausrüstung (12);
- eine Verarbeitungseinheit (3, 13);
- mindestens einen ersten Näherungssensor (4), der sich an der Stromverteilungsanlage und/oder an einem festen Ort getrennt von der Stromverteilungsanlage befindet;
- mindestens einen zweiten Umgebungssensor (14), der in die persönliche Schutzausrüstung integriert oder an dieser angebracht ist;
- mindestens einen ersten Stromverteilungsanlagen-Sensor (5), der sich im Stromverteilungsgerät und/oder an einem festen Ort getrennt vom Stromverteilungsgerät befindet, wobei der mindestens eine erste Stromverteilungsanlagen-Sensor einen oder mehrere Endschalter, Näherungssensoren, Positionssensoren oder Kameras umfasst;
- mindestens einen zweiten Stromverteilungsanlagen-Sensor (15), der in die persönliche Schutzausrüstung integriert oder an dieser angebracht ist; und
- eine Benutzerschnittstelle (16), die in die persönliche Schutzausrüstung integriert oder an dieser angebracht ist;
wobei die Stromverteilungsanlage eine Außenhülle umfasst und wobei die Außenhülle mindestens eine Tür umfasst, die so konfiguriert ist, dass sie den Zugang zum Inneren der Stromverteilungsanlage ermöglicht, und/oder wobei die Außenhülle mindestens eine Abdeckung umfasst, die so konfiguriert ist, dass sie den Zugang zum Inneren der Stromverteilungsanlage ermöglicht;
wobei die persönliche Schutzausrüstung so konfiguriert ist, dass sie von einer Person getragen werden kann;
wobei der mindestens eine erste Umgebungssensor so konfiguriert ist, dass er erste Umgebungssensordaten in einem Bereich außerhalb der Außenhülle der Stromverteilungsanlage erfasst und die ersten Umgebungssensordaten an die Verarbeitungseinheit liefert;
wobei der mindestens eine zweite Umgebungssensor so konfiguriert ist, dass er zweite Umgebungssensordaten in dem Bereich außerhalb der Außenhülle der Stromverteilungsanlage erfasst und die zweiten Umgebungssensordaten an die Verarbeitungseinheit liefert;
wobei die Verarbeitungseinheit so konfiguriert ist, dass sie eine Position der Person in dem Bereich außerhalb der Außenhülle der Stromverteilungsanlage bestimmt, wobei die Bestimmung die Verwendung der ersten Umgebungssensordaten und der zweiten Umgebungssensordaten umfasst;
wobei die Verarbeitungseinheit so konfiguriert ist, dass sie einen Bildverarbeitungsalgorithmus implementiert, um die ersten Umgebungssensordaten zu verarbeiten und zu bestimmen, ob die Person mindestens ein Arbeitselement hat oder nicht;
wobei der mindestens eine erste Stromverteilungsanlagen-Sensor so konfiguriert ist, dass er Statusdaten der Außenhülle der Stromverteilungsanlage erfasst und die Statusdaten an die Verarbeitungseinheit übermittelt;
wobei der mindestens eine zweite Stromverteilungsanlagen-Sensor so konfiguriert ist, dass er Statusdaten der Außenhülle der Stromverteilungsanlage erfasst und die Statusdaten an die Verarbeitungseinheit liefert;
wobei die Verarbeitungseinheit so konfiguriert ist, dass sie die ersten Statusdaten und die zweiten Statusdaten verwendet, um zu bestimmen, ob die Außenhülle der Stromverteilungsanlage ungestört ist, wenn die mindestens eine Tür und/oder die mindestens eine Abdeckung korrekt geschlossen sind, oder ob die Außenhülle gestört ist, wenn eine oder mehrere Türen oder eine oder mehrere Abdeckungen offen oder nicht korrekt geschlossen sind oder eine oder mehrere Abdeckungen entfernt wurden;
wobei die Benutzerschnittstelle so konfiguriert ist, dass sie es der Person ermöglicht, beabsichtigte Aufgabeninformationen in Bezug auf die Stromverteilungsanlage einzugeben und die Aufgabeninformationen an die Verarbeitungseinheit zu übermitteln;
wobei die Verarbeitungseinheit so konfiguriert ist, dass sie auf der Grundlage der beabsichtigten Aufgabeninformationen bestimmt, ob zu erwarten ist, dass die Außenhülle der Stromverteilungsanlage ungestört ist, wenn die mindestens eine Tür und/oder die mindestens eine Abdeckung korrekt geschlossen sind, oder ob zu erwarten ist, dass die Außenhülle gestört ist, wenn eine oder mehrere Türen und/oder eine oder mehrere Abdeckungen offen sind oder eine oder mehrere Abdeckungen entfernt wurden;
wobei die Verarbeitungseinheit so konfiguriert ist, dass sie einen Personensicherheitszustand bestimmt, wobei die Bestimmung die Verwendung der Position der Person in dem Bereich außerhalb der Außenhülle der Stromverteilungsanlage und die Frage umfasst, ob die Außenhülle der Stromverteilungsanlage ungestört ist oder ob die Außenhülle gestört ist und ob zu erwarten ist, dass die Außenhülle der Stromverteilungsanlage ungestört ist oder ob zu erwarten ist, dass die Außenhülle gestört ist; und
wobei die Verarbeitungseinheit so konfiguriert ist, dass sie mindestens eine Maßnahme auf der Grundlage des Personensicherheitszustands und auf der Grundlage der Tatsache, ob die Person das Arbeitselement hat oder nicht, bestimmt und ergreift.

7. System nach Anspruch 6, wobei die persönliche Schutzausrüstung ein Head-up-Display (17) und/oder ein Extended-Reality-Anzeigesystem (18) umfasst und wobei die Verarbeitungseinheit so konfiguriert ist, dass sie eine Darstellung der Stromverteilungsanlage auf dem Head-up-Display und/oder dem Extended-Reality-Display anzeigt, wobei die Daten des Umgebungssensors verwendet werden.

## Revendications

1. Système de sécurité individuelle pour équipement de distribution d'énergie, comprenant :
- un équipement de distribution d'énergie (1) ;
- une unité de traitement (3) ;
- au moins un capteur de proximité (4) ; et
- au moins un capteur d'équipement de distribution d'énergie (5) ;
l'équipement de distribution d'énergie comprenant une enveloppe extérieure, et l'enveloppe extérieure comprenant au moins une porte configurée pour permettre l'accès à un intérieur de l'équipement de distribution d'énergie et/ou l'enveloppe extérieure comprenant au moins un couvercle configuré pour permettre l'accès à l'intérieur de l'équipement de distribution d'énergie ;
l'au moins un capteur de proximité étant configuré pour acquérir des données de capteur de proximité dans une zone située à l'extérieur de l'enveloppe extérieure de l'équipement de distribution d'énergie et fournir les données de capteur de proximité à l'unité de traitement ;
l'unité de traitement étant configurée pour déterminer une position d'une personne dans la zone située à l'extérieur de l'enveloppe extérieure de l'équipement de distribution d'énergie, la détermination comprenant l'utilisation des données de capteur de proximité ;
l'unité de traitement étant configurée pour mettre en œuvre un algorithme de traitement d'image pour traiter les données de capteur de proximité pour déterminer si la personne dispose d'au moins un élément de travail ou non ;
l'au moins un capteur d'équipement de distribution d'énergie étant configuré pour acquérir des données de statut de l'enveloppe extérieure de l'équipement de distribution d'énergie et fournir les données de statut à l'unité de traitement ;
l'unité de traitement étant configurée pour utiliser les données de statut pour déterminer si l'enveloppe extérieure de l'équipement de distribution d'énergie est non détériorée lorsque l'au moins une porte et/ou l'au moins un couvercle sont correctement fermés ou si l'enveloppe extérieure est détériorée lorsqu'une ou plusieurs portes ou un ou plusieurs couvercles sont ouverts ou mal fermés ou lorsqu'un ou plusieurs couvercles sont retirés ;
l'unité de traitement étant configurée pour déterminer un état de sécurité individuelle, la détermination comprenant l'utilisation de la position de la personne dans la zone située à l'extérieur de l'enveloppe extérieure de l'équipement de distribution d'énergie, et si l'enveloppe extérieure de l'équipement de distribution d'énergie est non détériorée ou si l'enveloppe extérieure est détériorée ; et
l'unité de traitement étant configurée pour déterminer et prendre au moins une mesure sur la base de l'état de sécurité individuelle et sur la base du fait que la personne dispose ou non de l'élément de travail.

2. Système selon la revendication 1, la détermination de la position de la personne dans la zone située à l'extérieur de l'enveloppe extérieure de l'équipement de distribution d'énergie comprenant l'utilisation, par l'unité de traitement, d'un algorithme de traitement d'image pour identifier une personne.

3. Système selon l'une quelconque des revendications 1 et 2, l'au moins un capteur d'équipement de distribution d'énergie comprenant un ou plusieurs éléments parmi des interrupteurs de fin de course, des capteurs de proximité, des capteurs de position, des caméras.

4. Système selon l'une quelconque des revendications 1 à 3, l'état de sécurité individuelle comprenant un état parmi : a) l'enveloppe extérieure de l'équipement n'est pas détériorée et aucune personne n'est détectée, b) l'enveloppe extérieure de l'équipement n'est pas détériorée et une personne est détectée à une distance X ou moins, c) l'enveloppe extérieure est détériorée et aucune personne n'est détectée à la distance X ou moins, d) l'enveloppe extérieure est détériorée et une personne est détectée comme venant d'entrer à proximité de l'équipement de distribution d'énergie, e) l'enveloppe extérieure est détériorée et une personne est détectée comme étant à la distance X ou moins, f) l'enveloppe extérieure est détériorée et une personne est détectée comme venant d'abandonner la proximité de l'équipement de distribution d'énergie, g) l'enveloppe extérieure est détériorée et aucune personne n'est détectée et au moins un élément de travail est détecté à la distance X ou moins comment ayant été apporté par une personne et la personne n'est pas détectée pendant une durée <T.

5. Système selon la revendication 4, l'au moins une mesure déterminée comprenant une ou plusieurs mesures parmi : A) l'activation d'une protection supplémentaire de l'équipement de distribution d'énergie dans le cas où l'état de sécurité individuelle est d) ou e) ; B) la visualisation d'une indication de sécurité dans le cas où l'état de sécurité individuelle est a) ou b), la visualisation d'une indication de danger dans le cas où l'état de sécurité individuelle est c), d), e) ou f) ; C) une indication au sol d'au moins une zone sûre dans la zone située à l'extérieur de l'enveloppe dans le cas où l'état de sécurité individuelle est c), d), e) ou f) et/ou une indication d'un équipement de protection individuelle à porter dans chaque zone située à l'extérieur de l'enveloppe dans le cas où l'état de sécurité individuelle est c), d), e) ou f) et/ou une indication d'un emplacement de la détérioration dans l'enveloppe extérieure dans le cas où l'état de sécurité individuelle est c), d), e) ou f) ; D) une signalisation pour avertir d'une approche ou d'un abandon de l'équipement de distribution d'énergie qui est dans un état non sûr dans le cas où l'état de sécurité individuelle est d) ou f).

6. Système de sécurité individuelle pour équipement de distribution d'énergie, comprenant :
- un équipement de distribution d'énergie (1) ;
- un équipement de protection individuelle (12) ;
- une unité de traitement (3, 13) ;
- au moins un premier capteur de proximité (4) situé sur l'équipement de distribution d'énergie et/ou à un emplacement fixe séparé de l'équipement de distribution d'énergie ;
- au moins un second capteur de proximité (14) intégré à l'équipement de protection individuelle ou fixé à celui-ci ;
- au moins un premier capteur d'équipement de distribution d'énergie (5) situé dans l'équipement de distribution d'énergie et/ou à un emplacement fixe séparé de l'équipement de distribution d'énergie, et l'au moins un premier capteur d'équipement de distribution d'énergie comprenant un ou plusieurs éléments parmi des interrupteurs de fin de course, des capteurs de proximité, des capteurs de position, des caméras ;
- au moins un second capteur d'équipement de distribution d'énergie (15) intégré à l'équipement de protection individuelle ou fixé à celui-ci ; et
- une interface d'utilisateur (16) intégrée à l'équipement de protection individuelle ou fixée à celui-ci ;
l'équipement de distribution d'énergie comprenant une enveloppe extérieure, et l'enveloppe extérieure comprenant au moins une porte configurée pour permettre l'accès à un intérieur de l'équipement de distribution d'énergie et/ou l'enveloppe extérieure comprenant au moins un couvercle configuré pour permettre l'accès à l'intérieur de l'équipement de distribution d'énergie ;
l'équipement de protection individuelle étant configuré pour être porté par une personne ;
l'au moins un premier capteur de proximité étant configuré pour acquérir des données de premier capteur de proximité dans une zone située à l'extérieur de l'enveloppe extérieure de l'équipement de distribution d'énergie et fournir les données de premier capteur de proximité à l'unité de traitement ;
l'au moins un second capteur de proximité étant configuré pour acquérir des données de second capteur de proximité dans la zone située à l'extérieur de l'enveloppe extérieure de l'équipement de distribution d'énergie et fournir les données de second capteur de proximité à l'unité de traitement ;
l'unité de traitement étant configurée pour déterminer une position de la personne dans la zone située à l'extérieur de l'enveloppe extérieure de l'équipement de distribution d'énergie, la détermination comprenant l'utilisation des données de premier capteur de proximité et des données de second capteur de proximité ;
l'unité de traitement étant configurée pour mettre en œuvre un algorithme de traitement d'image pour traiter les données de premier capteur de proximité pour déterminer si la personne dispose d'au moins un élément de travail ou non ;
l'au moins un premier capteur d'équipement de distribution d'énergie étant configuré pour acquérir des données de statut de l'enveloppe extérieure de l'équipement de distribution d'énergie et fournir les données de statut à l'unité de traitement ;
l'au moins un second capteur d'équipement de distribution d'énergie étant configuré pour acquérir des données de statut de l'enveloppe extérieure de l'équipement de distribution d'énergie et fournir les données de statut à l'unité de traitement ;
l'unité de traitement étant configurée pour utiliser les premières données de statut et les secondes données de statut pour déterminer si l'enveloppe extérieure de l'équipement de distribution d'énergie est non détériorée lorsque l'au moins une porte et/ou l'au moins un couvercle sont correctement fermés ou si l'enveloppe extérieure est détériorée lorsqu'une ou plusieurs portes ou un ou plusieurs couvercles sont ouverts ou mal fermés ou lorsqu'un ou plusieurs couvercles sont retirés ;
l'interface d'utilisateur étant configurée pour permettre à la personne d'entrer des informations de tâche prévue concernant l'équipement de distribution d'énergie et de fournir les informations de tâche à l'unité de traitement ;
l'unité de traitement étant configurée pour déterminer, sur la base des informations de tâche prévue, si l'enveloppe extérieure de l'équipement de distribution d'énergie est censée être non détériorée lorsque l'au moins une porte et/ou l'au moins un couvercle sont correctement fermés ou si l'enveloppe extérieure est censée être détériorée lorsqu'une ou plusieurs portes et/ou un ou plusieurs couvercles sont ouverts ou lorsqu'un ou plusieurs couvercles sont retirés ;
l'unité de traitement étant configurée pour déterminer un état de sécurité personnelle, la détermination comprenant l'utilisation de la position de la personne dans la zone située à l'extérieur de l'enveloppe extérieure de l'équipement de distribution d'énergie, et si l'enveloppe extérieure de l'équipement de distribution d'énergie est non détériorée ou si l'enveloppe extérieure est détériorée et si l'enveloppe extérieure de l'équipement de distribution d'énergie est censée être non détériorée ou si l'enveloppe extérieure est censée être détériorée ; et
l'unité de traitement étant configurée pour déterminer et prendre au moins une mesure sur la base de l'état de sécurité individuelle et sur la base du fait que la personne dispose ou non de l'élément de travail.

7. Système selon la revendication 6, l'équipement de protection individuelle comprenant une unité d'affichage tête haute (17) et/ou un système d'affichage en réalité augmentée (18), et l'unité de traitement étant configurée pour afficher une représentation de l'équipement de distribution d'énergie sur l'unité d'affichage tête haute et/ou l'unité d'affichage en réalité augmentée au moyen de l'utilisation des données de capteur de proximité.
